# NEUE EUROPÄISCHE PATENTSCHRIFT

(11) **EP 0 090 073 B2**
(45) Veröffentlichungstag und Bekanntmachung des Hinweises auf die Entscheidung über den Einspruch: **06.11.1996**
(45) Hinweis auf die Patenterteilung: 09.04.1986
(21) Anmeldenummer: 82108971.1
(22) Anmeldetag: 28.09.1982
(51) Int. Cl.: B01D 39/00, A62B 17/00, A62B 23/00, B01J 20/32

(54) **Verfahren zur Herstellung eines flexiblen, luftdurchlässigen, textilen Flächenfilters für Schutzanzüge**
Process for making a flexible, air-permeable, textile, flat sheet-like filter for protective suits
Procédé de fabrication d'un filtre textile à surface plane et perméable à l'air pour vêtements de protection

(30) Priorität: 27.03.1982 DE 3211322
(43) Veröffentlichungstag der Anmeldung: 05.10.1983
(73) Patentinhaber: von Blücher, Hubert, D-40237 Düsseldorf (DE); von Blücher, Hasso, D-40237 Düsseldorf (DE); de Ruiter, Ernest, Dr., D-51381 Leverkusen (DE)
(72) Erfinder: von Blücher, Hubert, D-40237 Düsseldorf (DE); von Blücher, Hasso, D-40237 Düsseldorf (DE); de Ruiter, Ernest, Dr., D-51381 Leverkusen (DE)
(74) Vertreter: Eggert, Hans-Gunther, Dr.

(56) Entgegenhaltungen:
- DE-A- 2 946 645
- DE-B- 1 619 297
- FR-A- 2 353 327
- GB-A- 2 077 141
- US-A- 3 091 550

## Beschreibung

Flexible, luftdurchlässige Flächenfilter für Schutzanzüge enthalten in der Regel eine Schicht mit einem Adsorbens für chemische Gifte. Typische Beispiele sind Polyurethanschäume und Vliese, die mit einem Gemisch aus fein vermahlener Aktivkohle und einer Binderdispersion beladen sind. Diese bekannten flexiblen Filter haben den großen Nachteil, daß sie nur begrenzt waschbar sind und bedingt durch die mehrlagige Konstruktion, den für die Haut erforderlichen Luftaustausch beeinträchtigen und infolgedessen zu einem Hitzestau führen. Bei Verwendung von Schaum als Trägermaterial kommt es zu einer durch die Poren des Schaums bedingten Ungleichmäßigkeit der Belegungsflächen und damit auch zu einer Ungleichmäßigkeit der Filterleistung, die dann in weiten Bereichen streut (DE-B-28 04 154).

Die DE-B-16 19 297 beschreibt ein Verfahren zur Herstellung eines flexiblen, luftdurchlässigen, textilen Flächenfilters für Schutzanzüge, bei dem eine wäßrige Beschichtungsmischung aus pulverförmigen Aktivkohleteilchen einer Teilchengröße von etwa 0,5 bis 50 µm und einem Bindemittel auf ein luftdurchlässiges textiles Flächengebilde aufgesprüht wird. Es ist an sich selbstverständlich und auch im Beispiel erwähnt, daß die aufgetragene Schicht getrocknet wird.

Im Beispiel wird die Aktivkohle in Form einer wäßrigen Aufschlämmung der Beschichtungsmischung zugesetzt. Dies dient offensichtlich dazu, die Kohle vor dem Aufsprühen gleichmäßig zu verteilen. Ein Hinweis darauf, daß das Aufschlämmen zur Beladung der Aktivkohle mit Wasser oder gar zu einer Füllung der - also im wesentlichen aller - Poren der Aktivkohle mit Wasser dienen soll, ist dieser Druckschrift nicht zu entnehmen.

Aus der DE-C-29 51 827 ist ein Schutzmaterial gegen chemische Schadstoffe und kurzzeitige Hitzeeinwirkung bekannt, das aus einer luftdurchlässigen, flexiblen Trägerschicht besteht, die ein- oder beidseitig Adsorberkörner eines Durchmessers von etwa 0,5 mm an Tragsäulen aus einer erstarrten Haftmasse trägt. Diese permeablen Flächengebilde werden zwar vielen Anforderungen gerecht, sind aber aufwendig in der Herstellung und wegen des benötigten körnigen Adsorbens, z.B. feinkörniger Aktivkohle, verhältnismäßig teuer.

Ein ähnliches Material ist aus de GB-A-2 077 141 bekannt. Auch hier sind granulierte Aktivkohleteilchen einer Größe von 0,25 bis 0,6 mm an einem textilen Träger mit einem Bindemittel fixiert. Die Kugelkohle wird auf das aufgedruckte Bindemittel aufgebracht, solange es noch klebrig ist und dann z.B. durch Umdrehen des Trägers abgeschüttelt. Das Bindemittel soll sich im wesentlichen nur zwischen den Körnern und dem Gewebe befinden, um die hohen Gasadsorptionswerte der Partikel, die damit weitgehend frei von Bindemittel bleiben, aufrechtzuerhalten.

Flächenfilter aus carbonisiertem Gewebe sind extrem teuer und mechanisch nicht belastbar. Hier läßt sich auch durch Kombinieren mit anderen Trägern nur beschränkt Abhilfe schaffen. In vielen Fällen kommen durch die unregelmäßige Beladung bei Bewegung die Adsorberteilchen miteinander in Berührung, was dann zu Abrieb führt.

Der Erfindung liegt die Aufgabe zugrunde, die Adsorberteilchen so auf ein luftdurchlässiges, flexibles Flächengebilde aufzutragen, daß eine sehr genau bestimmbare Menge möglichst gleichmäßig verteilt wird, um eine hohe Luftdurchlässigkeit, eine sehr gleichmäßige Filterleistung mit geringer Streuung, eine dementsprechend gute Schutzwirkung und geringen Abrieb zu erreichen. Außerdem sollte das verbesserte Flächenfilter ein geringes Volumen besitzen und gute Waschbarkeit ohne Qualitätsverluste ermöglichen.

Das wird erfindungsgemäß mit einem Verfahren zur Herstellung eines flexiblen, luftdurchlässigen, textilen Flächenfilters für Schutzanzüge erreicht, bei dem man die Poren einer pulverförmigen Aktivkohle einer Teilchengröße von 0,1 bis 50 µm zunächst mit Wasser belädt, dann mit der wäßrigen Dispersion eines polymeren Bindemittels vermischt, die 20 bis 200 Gew.-% Bindemittel, bezogen auf die Aktivkohle, enthält, Druckereihilfsmittel zusetzt und die erhaltene Paste durch Rotationssiebdruck auf ein luftdurchlässiges, textiles Flächengebilde in einem punktförmigen Muster aufdruckt, das eine Höhe von 0,05 bis 1 mm und einen Durchmesser von 0,2 bis 1 mm hat, 20 bis 150 g Aktivkohlen/m² enthält und 20 bis 80 % der Oberfläche des textilen Flächengebildes bedeckt und das aufgetragene Muster trocknet und verfestigt. Gegenstand der Erfindung ist ferner ein Schutzanzug, der ein nach diesem Verfahren hergestelltes Flächenfilter enthält.

Als Adsorbens kommen für die Zwecke der Erfindung Aktivkohlen verschiedener Provenienzen infrage. Die Aktivkohle kann aus geeigneten organischen Materialien in bekannter Weise hergestellt werden. Eine sehr brauchbare Aktivkohle erhält man beispielsweise durch die Carbonisierung von Ionenaustauschern auf Basis von Polystyrol und anschließende Aktivierung mit Wasserdampf. Die innere und äußere Oberfläche der Absorbenzien kann mit Additiven, wie Schwermetallkatalysatoren oder flammhemmenden, antibakteriellen oder fungiziden Substanzen beladen sein.

Um eine hohe Wirksamkeit zu gewährleisten, ist die pulverförmige Aktivkohle sehr fein gemahlen und hat nur eine Teilchengröße von 0,1 bis 50 µm, vorzugsweise 1 bis 10 µm. Mit Strahlmühlen läßt sich beispielsweise Aktivkohle auf Partikelgrößen von 95 % unter 3 µm bringen. Solche Aktivkohlen können vorherbestimmbare Porengrößen bei sehr hoher Aktivfläche bis zu 1.400 m²/g besitzen.

Das erfindungsgemäß auf die luftdurchlässige, flexible Trägerschicht aufgedruckte Muster enthält außer der pulverförmigen Aktivkohle ein Druckhilfsmittel. Für die Zwecke der Erfindung können sehr verschiedene polymere Bindemittel, wie beispielsweise Polyurethane, Polyacrylate oder Elastomere verwendet werden. Letztere können auch halogeniert, insbesondere chloriert oder fluoriert sein. Sehr geeignet sind ferner Schmelzkleber auf Basis von Polyamiden, Polyestern oder Ethylen-Vinylacetat-Copolymeren (EVA). Beim Druck liegen die polymeren Bindemittel und die Schmelzkleber meist als Dispersion vor. In dem aufgedruckten Muster verbleiben dann aber nur die polymeren verfestigten, beispielsweise vernetzten oder vulkanisierten Bindemittel. Ihr Anteil in dem aufgedruckten Adsorbensmuster macht 20 bis 200, vorzugsweise 50 bis 100 Gewichtsprozent, bezogen auf das Adsorbens aus.

Das auf den luftdurchlässigen, flexiblen Träger aufgedruckte Muster gebundenen Adsorbens bedeckt 20 bis 80 %, insbesondere 30 bis 70 % der Oberfläche des Trägers. Es kann bis zu 250 g Adsorbens pro m² enthalten. Die bevorzugten Mengen liegen bei 20 bis 150 g Adsorbens pro m². Das aufgedruckte Muster des gebundenen Adsorbens ist punktförmig. Durch die Wahl der Schablone wird die für die Adsorption wichtige Geometrie und der für die Luftdurchlässigkeit maßgebende Anteil an unbedruckter Fläche bestimmt. Die aufgetragene Menge ist innerhalb weniger Prozent konstant und gleichmäßig über die gesamte Warenbreite verteilt. Das aufgedruckte Muster des gebundenen Adsorbens hat eine Höhe von 0,05 bis 1 mm. Die Punkte oder Flecken können einen Durchmesser von 0,1 und 5 mm haben, vorzugsweise sind es jedoch nur 0,2 bis 1,5 mm. Aufgedruckte Linien haben etwa die gleiche Breite wie der Durchmesser der Punkte. Ihre Länge ist nur drucktechnisch durch die Schablone bedingt.

Die Klebewirkung des polymeren Bindemittels vor seiner Verfestigung läßt sich nutzen, um ein Verbundmaterial herzustellen, das zwischen zwei flexiblen, luftdurchlässigen Trägerschichten eine unterbrochene Schicht aus dem regelmäßig aufgedruckten Muster des gebundenen Adsorbens von bis zu etwa 1 mm Dicke aufweist. Dann liegen beispielsweise die Kohlenoppen zwischen zwei Bahnen und sind besser geschützt. Dieses Verbundmaterial läßt sich herstellen, indem man unmittelbar nach dem Bedrucken einer Bahn der flexiblen Trägerschicht eine weitere Trägerschichtbahn zulaufen läßt, dann das Verbundmaterial trocknet und durch Einwirkung von Druck und Hitze zusammenkaschiert. Analog läßt sich für bestimmte Anwendungszwecke auch ein Verbundmaterial herstellen, das zwischen drei flexiblen, luftdurchlässigen Trägerschichten zwei durchbrochene Schichten des aufgedruckten Musters des gebundenen Adsorbens enthält.

Die flexible, luftdurchlässige, textile Trägerschicht für das erfindungsgemäß herzustellende Flächenfilter für Schutzanzüge ist in der Regel ein textiles Flächengebilde aus Mineral-, Synthese- oder Naturfasern. Gewebe oder Gewirke werden wegen ihrer geringen Dicke bei hoher Festigkeit besonders bevorzugt. Die Auswahl des Trägertextils richtet sich nach den gewünschten Verwendungszwecken. Im Falle leichter Schutzbekleidung empfiehlt sich ein Verbundwerkstoff bzw. Mischgewebe aus Baumwolle und Mineralfasern, wobei die Mineralfaserseite mit dem aufgedruckten Muster des gebundenen Adsorbens versehen wird. Auch die gleichzeitige Verwebung dieser Materialien eignet sich vorzüglich. Auch die Mirverwendung von schwerentflammbaren bzw. besonders reißfesten Fasern, wie Aramiden (KEVLAR®, NOMEX®) oder Polyimiden, kann für bestimmte Anwendungszwecke sehr nützlich sein.

Wesentlich ist, daß das textile Flächengebilde, insbesondere Gewebe, eine ausreichende Luftdurchlässigkeit besitzt, damit das erfindungsgemäße Flächenfilter auch noch nach dem Bedrucken mit dem gebundenen Adsorbens und einer Bedeckung bis zu 90 % der Oberfläche des Trägers eine Luftdurchlässigkeit bei 10 mm Wassersäule von 100 bis 5000 Liter/m²·sec, vorzugsweise 500 bis 1000 Liter/m²·sec besitzt.

Die Dispersion des polymeren Bindemittels wird z.B. in Form von Polyurethan- oder Polyacrylatlatizes, dem Latex von gegebenenfalls halogenierten Elastomeren, wie Natur-, Synthese oder Siliconkautschuk, Chloropren oder Fluoropren eingesetzt. Dann müssen nach dem Druck die in einem bestimmten Muster aufgetragenen Häufchen des gebundenen Adsorbens zur Entfernung der flüchtigen Latexbestandteile getrocknet werden. Je nach der chemischen Natur des Bindemittels können sie anschließend auch noch Druck und/oder Hitze ausgesetzt werden, um verfestigt, d.h. vernetzt oder vulkanisiert zu werden.

Beim Druck eines feinpulverigen Adsorbensmaterials besteht die Schwierigkeit, daß für einen einwandfreien Siebdruck Druckereihilfsmittel benötigt werden. Diese würden aber ohne besondere Vorkehrungen von der Aktivkohle aufgenommen. Das hätte nicht nur den Nachteil, daß die Druckhilfsmittel ihre gewünschte Funktion einbüßen würden, sondern es könnte auch zu einer Blockierung der Poren des Adsorbens führen. Die Aktivkohle muß also vor den Komponenten geschützt werden, die nötig sind, um das Adsorbenspulver in einer Dicke bis zu 1 mm drucken und auf dem Träger fixieren zu können.

Bei Vorbehandlung des Aktivkohlepulvers in der beschriebenen Weise ist es also möglich, auch Pasten oder Adsorbentien auf eine Trägerschicht zu drucken und dann nach dem Trocknen und Verfestigen des Bindemittels trotzdem ein Adsorbens mit sehr hoher praktisch nicht beeinträchtigter Adsorptionskapazität zu erhalten. Die Menge der auf die Trägerschicht aufzutragenden Druckpaste wird insbesondere durch die Schablone der Rotationssiebdruckanlage bestimmt. Schablonen mit 10 bis 24 mesh und einer Dicke von 0,5 bis 1,5 mm haben sich besonders bewährt.

Die erfindungsgemäß hergestellten Flächenfilter mit einer Trägerschicht aus textilem Flächengebilde eignen sich besonders zur Verwendung von Schutzanzügen für ABC- oder Industrie-Schutz. Solche Schutzanzüge sind dann meist mehrlagig aufgebaut und haben äußere Lagen aus einem flammfesten wasser- und ölabweisenden Gewebe, Gelege oder Gewirke oder einem Vliesstoff aus Mineralfasern und einem ein Verbundmaterial mit einer oder mehreren Schichten des aufgedruckten, gebundenen Adsorbens zwischen luftdurchlässigen, textilen Flächengebilden.

### Beispiel

Ein ca. 100 g schweres Baumwollgewebe mit einer Luftdurchlässigkeit von 1.100 l/m²·sec bei 10 mm Wassersäule wurde mit einer Paste aus 1 Teil einer pulverisierten A-Kohle, 1,5 Teilen Wasser, 1 Teil einer Acrylatdispersion mit 50 % Festkörpergehalt, 0,02 Teilen eines handelsüblichen Verdickers, 0,01 Teil konzentriertes Ammoniak und 0,1 Teil einer Flammschutzkombination auf einer Rotationsbeschichtungsanlage (14 mesh Spezialschablone) bedruckt. Das Produkt hatte etwa 40 A-Kohlenoppen von 0,3 mm Höhe und 1 mm Durchmesser pro cm² und insgesamt eine Luftdurchlässigkeit von 430 l/m²·sec. Die Gesamtauflage von Aktivkohle und Acrylatbinder betrug 170 g/m². Das Vermögen, Lost zu adsorbieren, entsprach dem für ABC-Schutzausrüsrungen gängigen Forderungen. Die Abriebfestigkeit war im Praxisversuch sehr befriedigend.

## Patentansprüche

1. Verfahren zur Herstellung eines flexiblen, luftdurchlässigen, textilen Flächenfilters für Schutzanzüge, bei dem man die Poren einer pulverförmigen Aktivkohle einer Teilchengröße von 0,1 bis 50 µm zunächst mit Wasser belädt, dann mit der wäßrigen Dispersion eines polymeren Bindemittels vermischt, die 20 bis 200 Gew.-% Bindemittel, bezogen auf die Aktivkohle, enthält, Druckereihilfsmittel zusetzt und die erhaltene Paste durch Rotationssiebdruck auf ein luftdurchlässiges textiles Flächengebilde in einem punktförmigen Muster aufdruckt, das eine Höhe von 0,05 bis 1 mm und einen Durchmesser von 0,2 bis 1 mm hat, 20 bis 150 g Aktivkohlen/m² enthält und 20 bis 80 % der Oberfläche des textilen Flächengebildes bedeckt und das aufgetragene Muster trocknet und verfestigt.

2. Schutzanzug enthaltend ein nach Anspruch 1 hergestelltes Flächenfilter.

## Claims

1. Process for the production of a flexible, air-permeable, textile surface filter for protective suits, according to which the pores of a pulverulent activated carbon having a particle size of from 0,1 to 50 µm are first loaded with water; then said activated carbon is mixed with an aqueous dispersion of a polymeric binding agent, said dispersion containing 20 to 200 % by weight of said binding agent in relation to said activated carbon; printing adjuvants are added; and the obtained paste is printed in a punctiform pattern onto an air-permeable flat textile structure, said pattern having a height of from 0,05 to 1 mm and a diameter of from 0,2 to 1 mm and comprising 20 to 150 g activated carbon/m² and covering 20 to 80 % of the surface of said flat textile structure; and the printed pattern is dried and set.

2. Protective suit comprising a surface filter produced according to claim 1.

## Revendications

1. Procédé pour la fabrication d'un filtre plat textile, perméable à l'air et souple pour des vêtements de protection, selon lequelle on charge d'abord les pores d'un charbon actif pulvérulent ayant une granulométrie de 0,1 à 50 µm avec de l'eau, on le mélange ensuite avec une dispersion d'un liant polymère contenant de 20 à 200 % en poids de ce liant par rapport au charbon actif, on ajoute des auxiliaires d'imprimerie et on applique, par sérigraphie rotative, la paste obtenue sur une structure textile plate et perméable à l'air selon un dessin ponctuel, ledit dessin ayant une hauteur de 0,05 à 1 mm et un diamètre de 0,2 à 1 mm, contenant de 20 à 150 g charbon actif/m² et couvrant de 20 à 80 % de la surface de la structure textile plate, et on sèche le dessin appliqué et le durcit.

2. Vêtement de protection contenant un filtre plat obtenu selon la revendication 1.
